# EUROPEAN PATENT APPLICATION

(11) **EP 1 507 153 A1**
(43) Date of publication of application: **16.02.2005**
(21) Application number: 03725829.0
(22) Date of filing: 20.05.2003
(51) Int. Cl.: G02B 6/10, G02B 6/16, G02B 6/28

(54) **SIGNAL CUTOUT DEVICE, OPTICAL CONNECTOR, AND OPTICAL FIBER COUPLER**

(30) Priority: 22.05.2002 JP 2002147315; 22.05.2002 JP 2002147316
(71) Applicant: Showa Electric Wire and Cable Co.,Ltd., Kawasaki-shi, Kanagawa 210-0843 (JP)
(72) Inventor: Shishido, K., Showa Electric Wire & Cable Co, Ltd., Kawasaki-shi, Kanagawa 210-0843 (JP); Ishikawa, H., Showa Electric Wire & Cable Co, Ltd., Kawasaki-shi, Kanagawa 210-0843 (JP); Nakamura, M., Showa Electric Wire & Cable Co, Ltd., Kawasaki-shi, Kanagawa 210-0843 (JP)
(74) Representative: Glawe. Delfs. Moll
(86) International application number: PCT/JP2003/006245
(87) International publication number: WO 2003/098292

(57) **Abstract**

A signal cut-off device 4 includes an optical fiber which has a clad 42 on the outer periphery of a core 41, and first and second variation sections of a refractive index, 41a and 41b in which the period of a grating varies gradually along an optical axis are serially formed in the longitudinal direction of the core 41.

An optical connector which is detachably connected to the predetermined place of an optical transmission line includes a housing which has a plug-styled portion at a front end part and a jack-styled portion at a rear end part, and a ferrule which is mounted in the plug-styled portion. The signal cut-off device 4 is installed in the hole of the ferrule.

An optical fiber coupler includes a coupler body which multiplexes/demultiplexes an uplink signal (1260 - 1360 nm) and a downlink signal (1480 - 1580 nm), a COM port which is provided on the input side of the coupler body, and a 1.55 port and a 1.3 port which are provided on the output side of the coupler body.

A second connector is mounted on the end part of an optical fiber constituting the COM port, a PD is mounted on the end part of an optical fiber constituting the 1.55 port, and an LD is mounted on the end part of an optical fiber constituting the 1.3 port.

## Description

### Technical Field

The present invention relates to a signal cut-off device, an optical connector and an optical fiber coupler, and it relates to a signal cut-off device, an optical connector and an optical fiber coupler which can reliably cut off an image, a signal or the like transmitted from the side of a station in, for example, an FTTH (Fiber To The Home) system that applies a B-PON (Broadband-Passive Optical Network) system.

### Background Art

In recent years, a WDM (wavelength division multiplexing) access system called "B-PON" has been limelighted as a system which transmits large-capacity information.

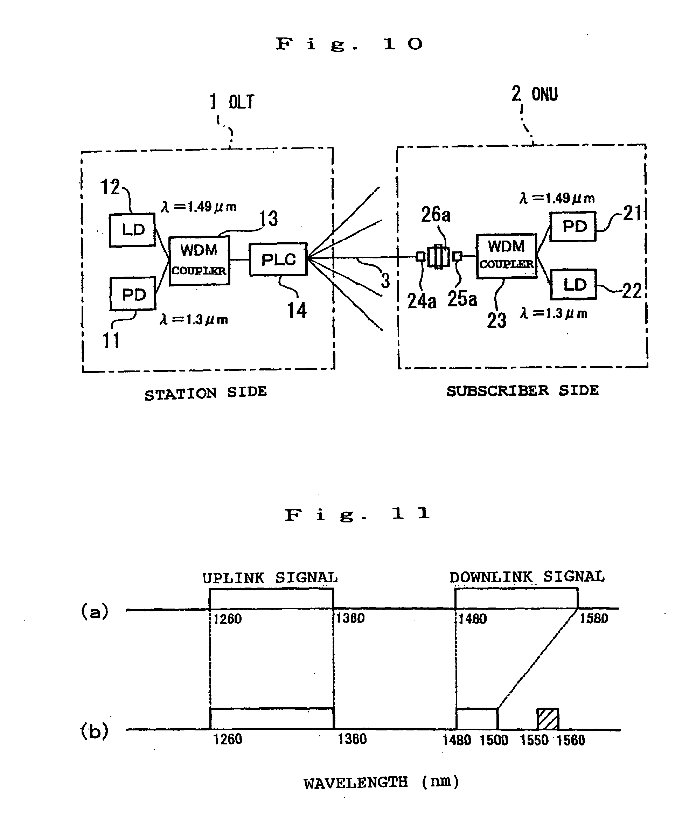

Fig. 10 shows a schematic configurational diagram in the case where the B-PON system is applied to an optical subscriber access system of FTTB (Fiber To The Building). Referring to the figure, the system includes an optical line terminal (hereinbelow, termed "OLT") 1 which is disposed on the side of a station, and a plurality of optical network units (hereinbelow, termed "ONUs") 2 which are disposed on the sides of subscribers. The OLT 1 and the respective ONUs 2 are connected through optical transmission lines 3. By the way, in Fig. 10, only one ONU 2 is illustrated for the brevity of description.

The OLT 1 includes a PD (Photo Diode) for reception (hereinbelow, termed "station-side PD") 11, an LD for transmission (hereinbelow, termed "station-side LD") 12, a WDM coupler (hereinbelow, termed "station-side coupler") 13 which multiplexes/demultiplexes two waves of uplink and downlink, and a PLC (planar lightwave circuit) splitter 14, while the ONU 2 includes a PD for reception (hereinbelow, termed "subscriber-side PD") 21, an LD for transmission (hereinbelow, termed "subscriber-side LD") 22, and a WDM coupler (hereinbelow, termed "subscriber-side WDM coupler") 23 which multiplexes/demultiplexes two waves of uplink and downlink. Here, the station-side PD 11 and the station-side LD 12 are connected to the station-side WDM coupler 13, to which the PLC splitter 14 is connected. Besides, the subscriber-side PD 21 and the subscriber-side LD 22 are connected to the subscriber-side WDM coupler 23, to which the PLC splitter 14 is connected through the optical transmission line 3. By the way, in the figure, signs 24a and 25a denote first and second connectors attached to the distal ends of optical fiber cords, respectively, and sign 26a denotes an adaptor for connecting the first and second connectors 24a and 25a.

In the B-PON system of such a configuration, as shown in Fig. 11(a), a band of 1260 - 1360 nm is used for an uplink signal from the ONU 2 to the OLT 1, and a band of 1480 - 1580 nm is used for a downlink signal from the OLT 1 to the ONU 2.

Meanwhile, the B-PON system of such a configuration is currently implemented for business users (FTTB) by way of trial, but it is under investigation to divert the FTTB system to general users (FTTH) for version-up in the future.

Since, however, the delivery of an image signal is not considered in such an FTTB system, the diversion to the FTTH system necessitates that, as shown in Fig. 11(b), a band (1550 - 1560 nm) for the delivery of an image signal is secured as the band of the existing signal is secured by compressing the used band of the downlink signal to 1480 - 1500 nm.

On the other hand, in such an FTTH system, some of the users do not require the "delivery of an image signal", so that the image signal of 1550 - 1560 nm needs to be cut off for such users.

Here, for the cut-off of the image signal, an isolation of at least 40 dB needs to be secured in the wide band of 1550 - 1560 nm, while the FTTH system is supposed to be mounted under the eaves or the like of the house of each user, so that also the installation environment of the system, especially the working temperatures thereof (-40 °C - 85 °C) need to be considered.

A filter of multi-layer dielectric films and a fiber Bragg grating (FBG) can be mentioned for optical devices which meet such requisites.

Since, however, the former optical device is used with the filter of multi-layer dielectric films inserted between optical fibers and fixed by a binder or with this filter held between connectors, it might cause a failure or its characteristics might change under the severe temperature environment.

Besides, in the latter optical device, the fiber Bragg grating which is elongate must be used for securing the isolation of at least 40 dB in the wide band of 1550 - 1560 nm, so that in the manufacture of such a fiber Bragg grating, a phase mask having the special specification of a chirp rate of at most 6.3 nm/cm is required, resulting in the drawbacks of an inferior yield and an increase in cost.

By the way, when a grating is written with a phase mask whose chirp rate is 5.5nm/mm, an isolation of 43 dB is anticipated in computation. However, when a grating was actually written with a phase mask whose chirp rate was 5.6 nm/mm, thereby to fabricate a fiber Bragg grating whose band was 1650 ± 5 nm, the lowest isolation was about 30 dB.

Further, in such an FTTH system, it is necessary to suppose the user's change that the "delivery of an image signal" not having been required becomes required. In such a case, the splicing work of the fiber Bragg grating needs to be redone, to incur the drawback that the configuration of the FTTH system cannot be changed-over with ease.

Besides, in the FTTH system, digital transmission is performed, and it is hardly influenced by reflection (total reflection) ascribable to the cut-off wavelength of the fiber Bragg grating, but suppressing such reflection to the utmost is ideal.

The present invention has been made in order to solve the drawbacks stated above, and it has for its object to provide a signal cut-off device, an optical connector and an optical fiber coupler which can reliably cut off the wavelength of an image signal by at least 40 dB in a wide band of 1550 - 1560 nm for users not requiring "delivery of an image signal" in, for example, an FTTH system that applies a B-PON system, and with which an initial system not requiring the "delivery of an image signal" can be easily and inexpensively changed-over midway to a system requiring the "delivery of an image signal".

### Disclosure of the Invention

In order to accomplish such an object, a signal cut-off device according to the present invention consists in that a first variation section of a refractive index, in which a period of a grating varies gradually along an optical axis, is provided in a core of an optical fiber, and that a second variation section of the refractive index, in which the period of the grating varies gradually along the optical axis, is provided in series with the first index variation section.

Besides, each of the first and second index variation sections in the signal cut-off device of the present invention is arrayed from a long-wave-region side toward a short-wave-region side in an optical waveguide direction.

According to the signal cut-off device of the present invention, the first and second index variation sections in which the period of the grating varies gradually along the optical axis are serially provided in the core of the optical fiber, so that a signal, such as an image signal which is transmitted from an optical line terminal, can be reliably cut off.

An optical connector according to the present invention consists in comprising a housing which includes a plug-styled portion at a front end part and a jack-styled portion at a rear end part, and a ferrule which is mounted in the plug-styled portion, wherein a signal cut-off device is installed in a hole of the ferrule.

According to the optical connector of the present invention, the plug-styled portion and the jack-styled portion are included, so that the optical connector can be detachably connected to an adaptor and a connector which are disposed in the predetermined places of an optical transmission line. As a result, an FTTH system can be easily and inexpensively constructed by diverting an FTTB system which is currently in operation, and an FTTH system which does not require "delivery of an image signal" can be easily changed-over to an FTTH system which requires the "delivery of an image signal".

An optical fiber coupler according to the present invention consists, in an optical fiber coupler having a port, in that a first variation section of a refractive index, in which a period of a grating varies gradually along an optical axis, is provided in a core of an optical fiber constituting the port, and that a second variation section of the refractive index, in which the period of the grating varies gradually along the optical axis, is provided in series with the first index variation section.

Besides, each of the first and second index variation sections in the optical fiber coupler of the present invention is arrayed from a long-wave-region side toward a short-wave-region side in an optical waveguide direction.

According to the optical fiber coupler of the present invention, the first and second index variation sections in which the period of the grating varies gradually along the optical axis are serially provided in the core of the optical fiber, so that a signal, such as an image signal which is transmitted from an optical line terminal, can be reliably cut off. Besides, the port itself of the optical fiber coupler serves as an optical waveguide, so that the coupler can be easily connected to an optical fiber which is an optical transmission line. As a result, an FTTH system can be easily and inexpensively constructed by diverting an FTTB system which is currently in operation, and an FTTH system which does not require "delivery of an image signal" can be easily changed-over to an FTTH system which requires the "delivery of an image signal".

### Brief Description of the Drawings

Fig. 1 is a vertical sectional view of a signal cut-off device according to the present invention.
Fig. 2 is an explanatory view of an optical connector according to the present invention, wherein Fig. 2(a) is a side view of the optical connector, and Fig. 2(b) is a front view of the optical connector.
Fig. 3 is an explanatory diagram showing the cut-off characteristics of the optical connector (signal cut-off device) according to the present invention.
Fig. 4 is a configurational diagram of a B-PON system (FTTH system not requiring delivery of an image signal) according to the present invention.
Fig. 5 is a configurational diagram of a B-PON system (FTTH system requiring the delivery of an image signal) according to the present invention.
Fig. 6 is a model diagram of an optical fiber coupler according to the present invention.

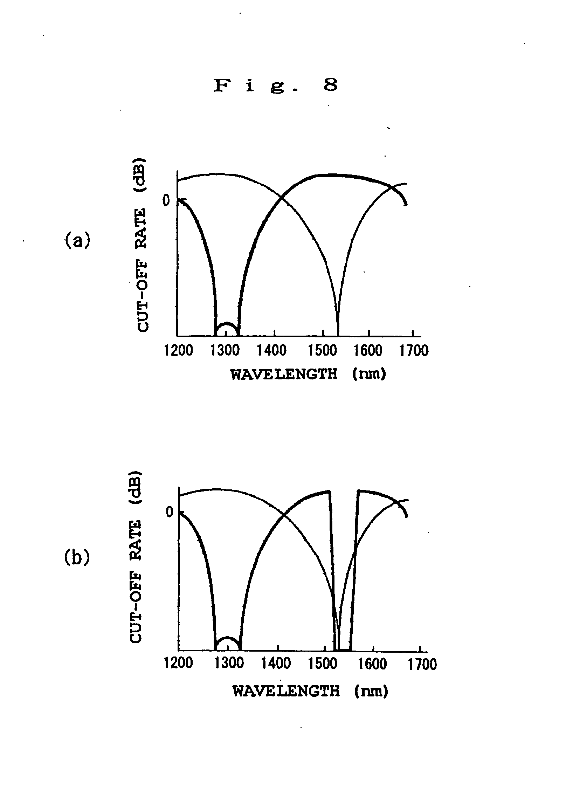

Fig. 7 is an explanatory view showing the manufacturing steps of the optical fiber coupler according to the present invention, wherein Fig. 7(a) is an explanatory view showing a state where one of two optical fibers is provided with first and second variation sections of a refractive index, Fig. 7(b) is an explanatory view showing a state where an optical branching/coupling portion is formed by fusing together and stretching the two optical fibers, Fig. 7(c) is an explanatory view showing a state where part of the other optical fiber is cut away, Fig. 7(d) is a side view showing a state where the optical branching/coupling portion is packaged, and Fig. 7(e) is a sectional view taken along line A - A in Fig. 7(d).
Fig. 8 is an explanatory view showing the cut-off characteristics of optical fiber couplers, wherein Fig. 8(a) is an explanatory view showing the cut-off characteristics of the optical fiber coupler in the prior art, and Fig. 8(b) is an explanatory view showing the cut-off characteristics of the optical fiber coupler according to the present invention.
Fig. 9 is a configurational diagram of a B-PON system (FTTH system not requiring delivery of an image signal).
Fig. 10 is a configurational diagram of a B-PON system (FTTB system) in the prior art.
Fig. 11 is a waveform diagram of uplink and downlink signals in a B-PON system.

### Best Mode for Carrying Out the Invention

Now, preferred embodiments of a signal cut-off device, an optical connector and an optical fiber coupler according to the present invention will be described with reference to the drawings.

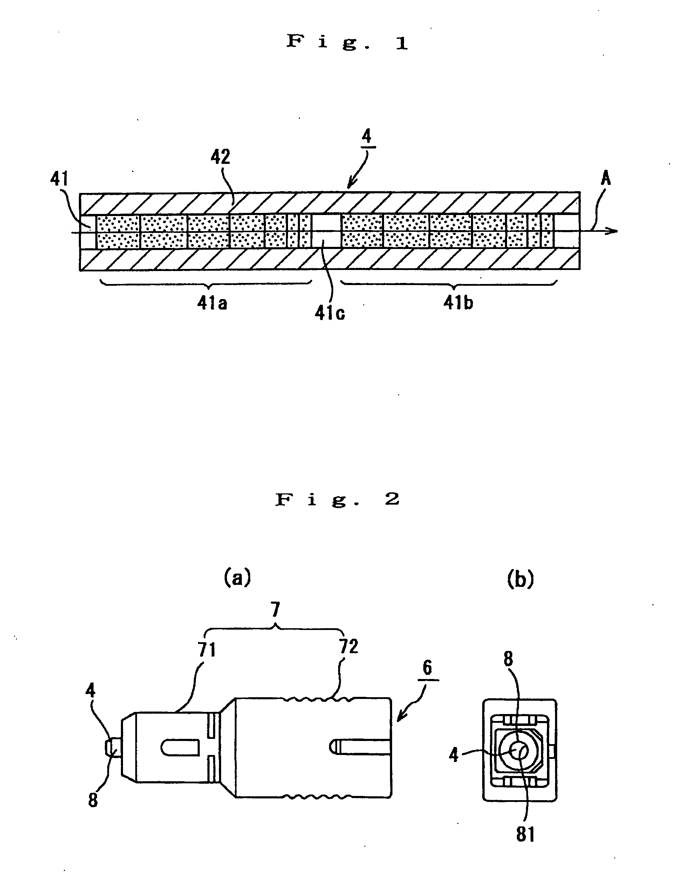

Fig. 1 shows a vertical sectional view of a signal cut-off device according to the present invention. Referring to the figure, the signal cut-off device 4 according to the present invention includes an optical fiber which has a clad 42 on the outer periphery of a core 41 that contains quartz-based glass as its main ingredient. In the core 41, first and second variation sections of a refractive index, 41a and 41b are formed serially in the longitudinal direction of this core 41, in the following way: A standard wide-band mask (not shown) whose chirp rate is 11 nm/cm is disposed outside the optical fiber, and the optical fiber is irradiated with ultraviolet radiation from outside the wide-band mask, whereby the first index variation section 41a in which the period of a grating varies gradually along an optical axis can be formed in the predetermined place of the core 41. Subsequently, the optical fiber is shifted in its axial direction in this state, and it is irradiated with ultraviolet radiation similarly to the above, whereby the second index variation section 41b in which the period of the grating varies gradually along the optical axis can be formed. Incidentally, three or more index variation sections may well be formed by a similar method.

Here, each of the first and second index variation sections 41a and 41b is provided so as to gradually vary from a long-wavelength-side region to a short-wavelength-side region in the proceeding direction A of light, and a flat region (region where the grating is not written) 41c having a predetermined length (about 1 mm) is provided between the first index variation section 41a and the second index variation section 41b.

In the signal cut-off device 4 of such a configuration, the fiber Bragg grating which can secure an isolation of at least 40 dB can be manufactured by the standard wide-band phase mask whose chirp rate is 11 nm/cm, so that a yield does not lower, and a manufacturing cost is not apprehended to increase. Moreover, since the grating is written in the core of the optical fiber, the signal cut-off device can be easily mounted in a ferrule. Further, the characteristics of the signal cut-off device can be stabilized more than by the cut-off of an image signal based on a filter of multi-layer dielectric films.

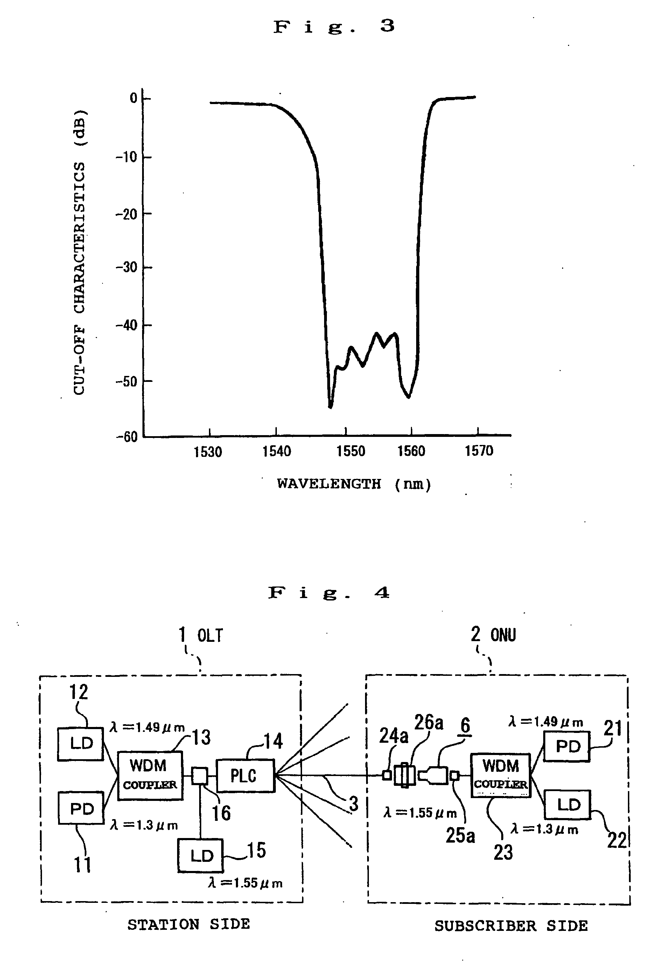

Fig. 2(a) shows a side view of an optical connector which employs the signal cut-off device 4 thus manufactured, while Fig. 2(b) shows a front view of the optical connector. Referring to the figures, the optical connector 6 according to the present invention includes a housing 7 which has a plug-styled portion 71 at its front end part, and a jack-styled portion 72 at its rear endpart. An elongate ferrule (about 22.4 mm) 8 constructed of a zirconia ferrule or the like is mounted in the plug-styled portion 71 of the housing 7.

The ferrule 8 is provided with a hole 81, in which the signal cut-off device (fiber grating) 4 statedbefore is inserted and fixed.

Here, the first and second index variation sections 41a and 41b of the signal cut-off device 4 are mounted so as to be arrayed from the long-wave-region side onto the short-wave region side in the proceeding direction A of the light. In this embodiment, the first index variation section 41a is mounted facing the side of the plug-styled portion 71, and the second index variation section 41b facing the side of the jack-styled portion 72. The influence of reflection ascribable to the grating can be relieved about 2 dB by mounting the signal cut-off device 4 within the housing 7 in such a state. This phenomenon is interpreted to occur on the basis of the fact that, when the signal light is entered from the long-wave-region side, it will undergo a radiation mode loss in passing through the grating, whereupon the resulting reflected light will be emitted from the clad 42 without being propagated in the core 41.

Theferrule 8 shoulddesirablybedesignedsoas to flexibly conform to any connector such as FC connector or SC connector, and the signal cut-off device (fiber grating) 4 should desirably be put into the shape of one package and mounted in the ferrule as a plug type.

According to the optical connector of such a configuration, as will be stated later, the signal cut-off device can be detachably connected to a connector which is disposed in the predetermined place of an optical transmission line.

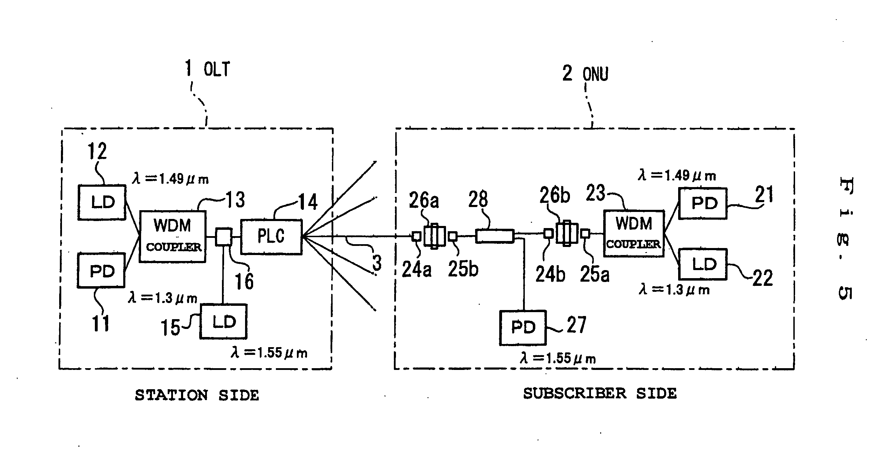

Fig. 3 shows the cut-off characteristics of the optical connector (signal cut-off device) of such a configuration.

It is understood from the figure that, according to the optical connector (signal cut-off device) of the present invention, the image signal can be cut off within a range of about 40 - 55 dB in a wide band of 1550 - 1560 nm.

Accordingly, when the optical connector (signal cut-off device) of such a configuration is used, the image signal which is transmitted from an optical line terminal on a station side can be reliably cut off on a subscriber side.

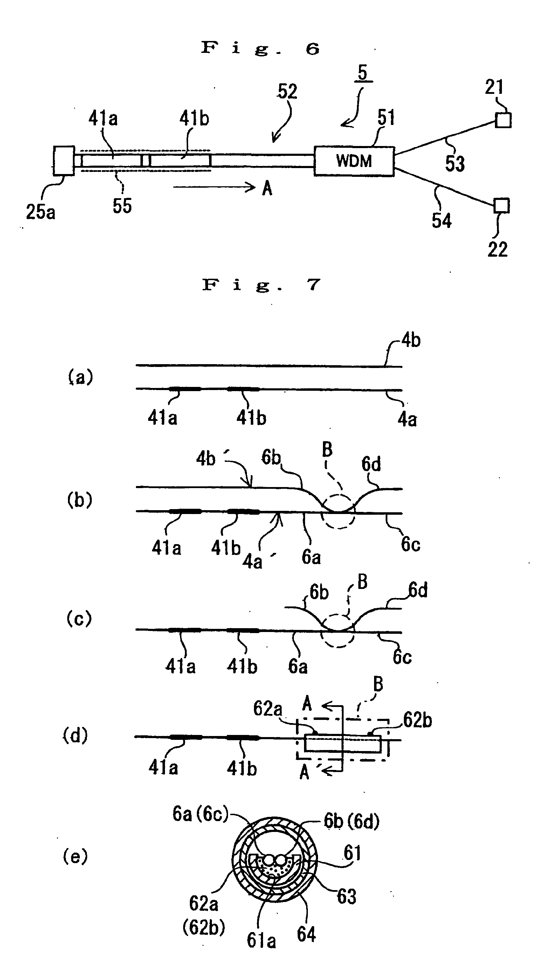

Figs. 4 and 5 show configurational diagrams of B-PON systems in the case where the optical connector of the present invention is applied to an FTTH system. By the way, in these figures, the same signs are assigned to portions which are common to those in Fig. 10, and which shall be omitted from detailed description.

Referring to Fig. 4, the B-PON system includes an OLT 1 disposed on the side of a station, and a plurality of ONUs 2 disposed on the sides of subscribers, and the OTL 1 and the individual ONUs 2 are connected by optical transmission lines 3 each being made of a single-mode optical fiber or the like. By the way, in Fig. 4 and in Fig. 5 to be referred to later, only one ONU 2 is illustrated for the brevity of description.

The OLT 1 includes a first station-side PD 11 which receives an uplink signal of 1.3 µm band, a first station-side LD 12 which transmits a downlink signal of 1.49 µm band, a station-side WDM coupler 13 which multiplexes/demultiplexes two waves of uplink and downlink, a PLC splitter 14, and a second station-side LD 15 which transmits a downlink signal of 1.55 µm band, while the ONU 2 includes a first subscriber-side PD 21 which receives the downlink signal of 1.49 µm band, a subscriber-side LD 22 which transmits the uplink signal of 1.3 µm band, a subscriber-side WDM coupler 23 which multiplexes/demultiplexes the two waves of uplink and downlink, and the optical connector 6 of the present invention.

Here, the station-side PD 11 and the first station-side LD 12 are connected to the station-side WDM coupler 13, to which the PLC splitter 14 and the second station-side LD 15 are connected through a station-side coupler (splitter) 16. Besides, the first subscriber-side PD 21 and the subscriber-side LD 22 are connected to the subscriber-side WDM coupler 23, to which the optical connector 6 of the present invention is connected through a second connector 25a. Further, the optical connector 6 is connected to a first adaptor 26a, to which the PLC splitter 14 is connected through a first connector 24a as well as the optical transmission line 3.

In the B-PON system of such a configuration, the optical connector 6 is provided with the plug-styled portion 71 (refer to Fig. 2) and the jack-styled portion 72 (refer to Fig. 2), so that the plug-styled portion 71 of the optical connector 6 can be connected to the first adaptor 26a disposed in the predetermined place of the optical transmission line 3, while the second connector 25a can be detachably connected to the jack-styled portion 72 of the optical connector 6.

Consequently, according to the B-PON system of such a configuration, the FTTH system which does not require "delivery of an image signal" can be easily and inexpensively constructed in such a way that the optical connector 6 of the present invention is detachably connected to the adaptor and connector of the optical transmission line as constitute an FTTB system which is currently in operation.

Next, in a case where the FTTH system not requiring the "delivery of an image signal" is to be changed-over to an FTTH system requiring the "delivery of an image signal", the optical connector 6 of the present invention may be detached from the FTTH system shown in Fig. 4, whereupon as shown in Fig. 5, the second connector 25a is connected to a filter (or coupler) 28 through a second adaptor 26b as well as a third connector 24b, a second subscriber-side PD 27 which receives the downlink signal of 1.55 µm band is connected to the filter (or coupler) 28, and the filter (or coupler) 28 is connected to the first adaptor 26a through a fourth connector 25b.

Thus, the FTTH system not requiring the "delivery of an image signal" can be easily and inexpensively changed-over to the FTTH system requiring the "delivery of an image signal".

Fig. 6 shows a model diagram in the case where an optical fiber coupler according to the present invention is applied to an FTTH system. By the way, in the figure, the same signs are assigned to portions which are common to those in Figs. 1, 4 and 5, and which shall be omitted from detailed description.

Referring to Fig. 6, the optical fiber coupler 5 of the present invention includes a coupler body 51 which multiplexes/demultiplexes an uplink signal (1260 - 1360 nm) and a downlink signal (1480 - 1580 nm), a COM port 52 which is located on the input side of the coupler body 51, and first and second OUT ports 53 and 54 which are located on the output side of the coupler body. Here, a second connector 25a is mounted on the end part of an optical fiber constituting the COM port 52, while a PD 21 is mounted on the end part of an optical fiber constituting the first OUT port 53 (hereinbelow, termed "1.55 port"), and an LD 22 is mounted on the end part of an optical fiber constituting the second OUT port 54 (hereinbelow, termed "1.3 port").

The optical fiber coupler 5 of such a configuration can be manufactured in a way shown in Fig. 7. By the way, in the figure, the same signs are assigned to portions common to those in Fig. 1 and Figs. 4 - 6.

First, as shown in Fig. 7(a), two optical fibers 4a and 4b in each of which the periphery of a bare optical fiber of single mode is coated with a resin are prepared, and first and second variation sections of a refractive index, 41a and 41b are serially written into the core of one 4a of the optical fibers by a method to be stated later. Besides, the resin coatings of the intermediate parts of the two optical fibers 4a and 4b are removed over predetermined lengths, thereby to denude the bare optical fibers 4a' and 4b'.

Subsequently, the two bare optical fibers 4a' and 4b' are fused together and stretched while being melted by a micro burner equipment or the like, and the stretching is stopped at the position of a predetermined branching ratio. Thus, as shown in Fig. 7(b), an optical branching/coupling portion B, and first - fourth optical fiber portions 6a - 6d extending from both the sides of this portion are obtained. Here, as shown in Fig. 7(c), that part of the other optical fiber 4b' which is joined to the second optical fiber portion 6b is cut away.

Subsequently, as shown in Figs. 7(d) and (e), the optical branching/coupling portion B and the first - fourth optical fiber portions 6a - 6d are accommodated in a groove 61a which is provided in a package base 61 made of pure quartz or the like, and the first - fourth optical fiber portions 6a - 6d are fixed to the package base 61 through binder portions 62a and 62b, whereupon the resulting structure is accommodated in a stainless steel tube 63 or the like. Incidentally, a protective tube 64 such as shrinkable tube is disposed on the outer periphery of the stainless steel tube 63 as may be needed. Thus, it is possible to obtain the optical fiber coupler 5 which has the COM port 52, the 1.55 port 53 and the 1.3 port 54.

Next, the method of writing the grating into the core of the optical fiber constituting the COM port 52 will be described.

First, the optical fiber 4 is formed in such a structure that, as in the signal cut-off device shown in Fig. 1, a clad 42 is provided on the outer periphery of a core 41 which contains quartz-based glass as its main ingredient, and the outer periphery of the clad 42 is coated with an UV-hardenable resin or the like resin (not shown) . Besides, the resin coating at a part where the grating is to be written is peeled off to denude the clad 42, and a standard wide-band mask (not shown) whose chirp rate is 11 nm/cm is disposed outside the clad 42. When the optical fiber is irradiated with ultraviolet radiation from outside the wide-band mask in this state, the first variation section of a refractive index, 41a in which the period of the grating varies gradually along an optical axis is formed in the predetermined place of the core 41.

Subsequently, the optical fiber 4 is shifted in its axial direction in this state, and it is irradiated with ultraviolet radiation similarly to the above, whereby the second variation section of the refractive index, 41b in which the period of the grating varies gradually along the optical axis is formed in series with the first section 41a. Incidentally, after the first and second index variation sections 41a and 41b have been formed, the optical fiber 4 is subjected to recoating 55 (refer to Fig. 6) with the UV-hardenable resin or the like, and if necessary, the resulting structure is subjected to packaging with a metal or the like.

Here, as in the foregoing, each of the first and second index variation sections 41a and 41b is provided so as to gradually vary from a long-wavelength-side region to a short-wavelength-side region in the proceeding direction A of light, and a flat region (region where the grating is not written) 41c having a predetermined length (about 1 mm) is provided between the first index variation section 41a and the second index variation section 41b.

In the optical fiber coupler having such two index variation sections, the first and second index variation sections 41a and 41b are serially formed in the core of one optical fiber, and hence, the fiber Bragg grating which can secure an isolation of at least 40 dB can be manufactured by the standard wide-band phase mask whose chirp rate is 11 nm/cm, with the result that a yield does not lower, and a manufacturing cost is not apprehended to increase. Moreover, since the grating is written in the core of the optical fiber, the characteristics of the optical fiber coupler can be stabilized more than by the cut-off of an image signal based on a filter of multi-layer dielectric films. Further, in the case where each of the first and second index variation sections 41a and 41b is provided so as to gradually vary from the long-wavelength-side region to the short-wavelength-side region in the proceeding direction A of the light, the influence of reflection ascribable to the grating can be relieved about 2 dB. This phenomenon is interpreted to occur on the basis of the fact that, when the signal light is entered from the long-wave-region side, it will undergo a radiation mode loss in passing through the grating, whereupon the resulting reflected light will be emitted from the clad 42 without being propagated in the core 41.

Fig. 8(a) shows the cut-off characteristics of an optical fiber coupler in the prior art, while Fig. 8(b) shows the cut-off characteristics of the optical fiber coupler according to the present invention. By the way, in each of Figs. 8(a) and (b), a fine line indicates the cut-off characteristics of the 1.3 port, and a thick line indicates the cut-off characteristics of the 1.55 port.

First, regarding the prior-art optical fiber coupler, it is understood from Fig. 8(a) that the 1.3 port transmits the signal of 1.3 nm band nearly 100 %, whereas it transmits no signal in the 1.55 nm band, and that the 1.55 port transmits the signal of 1.55 nm band nearly 100 %, whereas it transmits almost no signal in the 1.3 nm band.

Next, regarding the optical fiber coupler of the present invention, it is understood from Fig. 8(b) that the 1.3 port exhibits the same cut-off characteristics as those of the prior-art optical fiber coupler, but that the 1.55 port hardly transmits the signal of 1.3 nm band, while it extracts the signal in the 1.55 nm band.

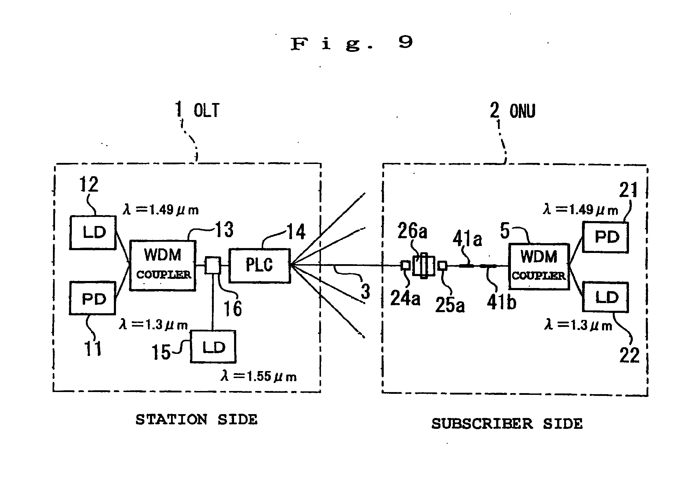

Fig. 9 shows a configurational diagram of a B-PON system in the case where the optical fiber coupler of the present invention is applied to an FTTH system. By the way, in Fig. 9, the same signs are assigned to portions which are common to those in Figs. 4 and 6, and which shall be omitted from detailed description.

Referring to Fig. 9, the B-PON system includes an OLT 1 disposed on the side of a station, and a plurality of ONUs 2 disposed on the sides of subscribers, and the OTL 1 and the individual ONUs 2 are connected by optical transmission lines 3 each being made of a single-mode optical fiber or the like. By the way, in Fig. 9, only one ONU 2 is illustrated for the brevity of description.

The OLT 1 includes a first station-side PD 11 which receives an uplink signal of 1.3 µm band, a first station-side LD 12 which transmits a downlink signal of 1.49 µm band, a station-side WDM coupler 13 which multiplexes/demultiplexes two waves of uplink and downlink, a PLC splitter 14, and a second station-side LD 15 which transmits a downlink signal of 1.55 µm band, while the ONU 2 includes a first subscriber-side PD 21 which receives the downlink signal of 1.49 µm band, a subscriber-side LD 22 which transmits the uplink signal of 1.3 µm band, and the subscriber-side WDM coupler 5 of the present invention.

Here, the station-side PD 11 and the first station-side LD 12 are connected to the station-side WDM coupler 13, to which the PLC splitter 14 and the second station-side LD 15 are connected through a station-side coupler (splitter) 16. Besides, the first subscriber-side PD 21 and the subscriber-side LD 22 are connected to the subscriber-side WDM coupler 5, to which a first adaptor 26a is connected through a second connector 25a. Further, the first adaptor 26a is connected to a first connector 24a, to which the PLC splitter 14 is connected through the optical transmission line 3.

In the B-PON system of such a configuration, the fiber Bragg grating and the coupler are made unitary, in other words, the first and second index variation sections 41a and 41b are serially formed in the core of the optical fiber constituting the COM port of the subscriber-side WDM coupler 5, so that the downlink signal of 1.55 nm band can be cut off. Besides, the connector is connected to the end part of the COM port, so that it can be detachably connected to the connector disposed on the side of the optical network unit of the optical transmission line 3.

Consequently, according to the B-PON system of such a configuration, the FTTH system which does not require "delivery of an image signal" can be easily and inexpensively constructed in such a way that the optical fiber coupler 5 of the present invention is detachably connected to the adaptor and connector of the optical transmission line as constitute an FTTB system which is currently in operation.

Next, in a case where the FTTH system not requiring the "delivery of an image signal" is to be changed-over to an FTTH system requiring the "delivery of an image signal", the optical fiber coupler 5 of the present invention may be replaced with the optical fiber coupler 23 in the prior art as shown in Fig. 5 referred to before, whereupon the second connector 25a is connected to a filter (or coupler) 28 through a second adaptor 26b as well as a third connector 24b, a second subscriber-side PD 27 which receives the downlink signal of 1.55 µm band is connected to the filter (or coupler) 28, and the filter (or coupler) 28 is connected to the first adaptor 26a through a fourth connector 25b.

Thus, the FTTH system not requiring the "delivery of an image signal" can be easily and inexpensively changed-over to the FTTH system requiring the "delivery of an image signal".

Incidentally, although the foregoing embodiments have been described as to the cases of applying the signal cut-off device and the optical fiber coupler to the B-PON system, the present invention is not restricted to the application, but it may well be applied to another system which cuts off any signal other than the image signal. Besides, the optical connector 6 is not restricted to the connection to the optical transmission line 3 between the subscriber-side WDM coupler 23 and the PLC splitter 14, but it may well be connected to the optical transmission line between the subscriber-side WDM coupler 23 and the subscriber-side PD 21. Further, the first and second index variation sections 41a and 41b are not restricted to the formation on the COM port side, but they may well be formed on the 1.55 port side. In addition, the number of the index variation sections to be formed is not restricted to two, but three or more index variation sections may well be formed as may be needed.

### Industrial Applicability

As understood from the above description, according to the signal cut-off device of the present invention, first and second variation sections of a refractive index, in which the period of a grating varies gradually along an optical axis, are serially provided in the core of an optical fiber, so that a signal, such as an image signal which is transmitted from an optical line terminal, can be reliably cut off. Besides, according to the optical connector of the present invention, a plug-styled portion and a jack-styled portion are included, so that the optical connector can be detachably connected to an adaptor and a connector disposed in the predetermined places of an optical transmission line. As a result, an FTTH system can be easily and inexpensively constructed by diverting an FTTB system currently in operation, and an FTTH system not requiring "delivery of an image signal" can be easily changed-over to an FTTH system requiring the "delivery of an image signal". Further, according to the optical fiber coupler of the present invention, first and second variation sections of a refractive index, in which the period of a grating varies gradually along an optical axis, are serially provided in the core of an optical fiber, so that a signal, such as an image signal which is transmitted from an optical line terminal, can be reliably cut off. Besides, the port itself of the optical fiber coupler serves as an optical waveguide, so that the optical fiber coupler can be easily connected to, for example, an optical transmission line constituting a B-PON system. As a result, an FTTH system can be easily and inexpensively constructed by diverting an FTTB system currently in operation, and an FTTH system not requiring "delivery of an image signal" can be easily changed-over to an FTTH system requiring the "delivery of an image signal".

## Claims

1. A signal cut-off device **characterized in that** a first variation section of a refractive index, in which a period of a grating varies gradually along an optical axis, is provided in a core of an optical fiber, and that a second variation section of the refractive index, in which the period of the grating varies gradually along the optical axis, is provided in series with the first index variation section.

2. A signal cut-off device as defined in claim 1, **characterized in that** each of the first and second index variation sections is arrayed from a long-wave-region side toward a short-wave-region side in an optical waveguide direction.

3. An optical connector **characterized by** comprising a housing which includes a plug-styled portion at a front end part and a jack-styled portion at a rear end part, and a ferrule which is mounted in saidplug-styledportion, wherein the signal cut-off device as defined in claim 1 or claim 2 is installed in a hole of said ferrule.

4. In an optical fiber coupler having a port, an optical fiber coupler **characterized in that** a first variation section of a refractive index, in which a period of a grating varies gradually along an optical axis, is provided in a core of an optical fiber constituting the port, and that a second variation section of the refractive index, in which the period of the grating varies gradually along the optical axis, is provided in series with the first index variation section.

5. An optical fiber coupler as defined in claim 4, **characterized in that** each of the first and second index variation sections is arrayed from a long-wave-region side toward a short-wave-region side in an optical waveguide direction.
